# EUROPEAN PATENT APPLICATION

(11) **EP 3 243 861 A1**
(43) Date of publication of application: **15.11.2017**
(21) Application number: 16305560.1
(22) Date of filing: 13.05.2016
(51) Int. Cl.: C08J 7/12, C08G 71/04, C08G 18/83, C08G 64/18, C08G 64/42

(54) **METHOD FOR PREPARING POLYURETHANE AND/OR POLYCARBONATE SURFACE-MODIFIED SUBSTRATES**

(71) Applicant: CENTRE NATIONAL DE LA RECHERCHE SCIENTIFIQUE, 75794 Paris Cedex 16 (FR); Vygon, 95440 Ecouen (FR); Ecole Nationale Supérieure de Chimie Paris, 75231 Paris Cedex (FR); Université Pierre et Marie Curie, 75252 Paris Cedex 05 (FR); Institut Curie, 75248 Paris Cedex 05 (FR)
(72) Inventor: SEMETEY, Vincent, 75005 Paris (FR); RHONE, Benoît, 75005 PARIS (FR)
(74) Representative: Nony

(57) **Abstract**

The present invention refers to a method for treating the surface of a polymer substrate to confer to said substrate surface a physical and/or biochemical surface-modified property, said polymer and/or copolymer containing in at least one of its repetitive units at least a function of formula (I): 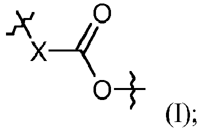 wherein it comprises at least a step consisting of exposing, within a solvent, said substrate surface with at least one compound containing at least a hydroxyl group and a part thereof being able to confer said modified property to said substrate surface.

The present invention further relates to a surface modified substrate essentially made of said polymer, whose surface has been treated to confer to said substrate surface a physical and/or biochemical surface-modified property wherein it is obtainable by a method according to the present invention and to the use of said modified substrate for the production of medical devices or antifouling materials.

## Description

The present invention relates to a method to functionalize surfaces of polymers, especially of the polyurethane and polycarbonate type, and for example for providing an improved biocompatible polymer surface. It is more particularly directed to a method of surface modification of such polymer surfaces in the presence of a solvent.

Said polymers are in particular suitable as substrates for biomedical and drug delivery applications.

Two major problems are associated with the implantation of medical devices in the bloodstream: infection due to the adhesion of bacteria to the surface of the device and the formation of a biofilm; blood coagulation when blood proteins adsorb on the surface, as a starting point to the blood coagulation cascade that can lead to the adhesion of platelets and the formation of a blood clot in catheters for example.

To avoid these complications, various chemical modifications of polyurethane surface have been disclosed by applying different reactions at the surface. One common way is the use of the allophanate reaction to graft a diisocyanate on the surface and then use this spacer to graft various polymers or active molecules such as PEG for instance (for example in J.G. Archambault et al. "Protein resistant polyurethane surfaces by chemical grafting of PEO: amino-terminated PEO as grafting reagent" Colloids Surf. B Biointerfaces 39 (2004) 9-16).

Another two steps strategy based on the alkylation reaction of polyurethane has also been described (for example in I.S. Alferiev, et al. "Activated polyurethane modified with latent thiol groups" Biomaterials 23 (2002) 4753-4758). The alkylation reaction is a first step towards functionalization of the surface with antiadhesive moieties.

It also known from Y.Zhu et al. "Endothelium regeneration on luminal surface of polyurethane vascular scaffold modified with diamine and covalently grafted with gelatin" Biomaterials 25 (2004) 432-430, to benefit from the aminolysis reaction to covalently attach species modifying surface properties of polycarbonate-urethane.

However, these methods require several synthetic steps, so that said techniques are not easy to implement at an industrial scale.

As far as a surface modification of polycarbonate polymers is concerned, various solutions have also been proposed in the past.

It is among all disclosed in Yeow, B. et al. "Surface modification and characterization of polycarbonate microdevices for capture of circulating biomakers, both in vitro and in vivo" Anal. Chem. 85 (2013) 10196-10204, that PEG can be grafted on such polycarbonate surfaces by reduction of nitro groups for obtaining reactive amine functions.

Moreover, as for polycarbonate-urethane, works have been also performed to benefit from the aminolysis reaction to covalently attach species modifying surface properties of polycarbonate substrates, in particular in the microfluidic field (it may be for example reported to Jankowski, P. et al. "Hydrophobic modification of polycarbonate for reproducible and stable formation of biocompatible microparticles" Lab Chip 11 (2011) 748-752).

Moreover, reactions with alcohols, named transcarbamoylation and transcarbonatation are known in the literature as reactions achieving a radical conversion at the carbonyl group of the urethane or carbonate function.

As far as transcarbamoylation of non-polymeric structures, the article Tundo et al. "Synthesis of carbamates from amines and dialkyl carbonates: influence of leaving and entering groups" Synlett 10 (2010) 1567-1571 may be cited.

Such specific reactions are additionally known as alternative routes to synthesize polyurethanes and polycarbonates starting from the reaction of diurethane with diol segments, and respectively cyclic carbonates, sometimes in presence of various catalysts.

However, to the knowledge of the inventors, such reactions have never been implemented for the purpose of surface modification, *i.e.* for achieving new properties of the polymers specifically on their surface.

It follows that there still exists a need for a simple, inexpensive and widely accessible method conferring desired modified properties to polymers, especially of the polyurethane and polycarbonate type in high density.

It is moreover desirable to have at one's disposal a generic method able to confer to polymers, especially of the polyurethane and polycarbonate type surfaces a wide range of modified properties which can for example be chosen among: hydrophilic character; improved hydrophobic character, cytotoxic properties such as antibiotic, bactericidal, virucidal and/or fungicidal properties; cell-adhesion property; improved biocompatibility such as protein/bacteria/cell repellency or adhesion property and reactivity property which renders said surface able to immobilize biomolecules.

Moreover, there exists a need to find new methods for surface modification of polymers comprising urethane and/or carbonate functions able to be performed under simple conditions, and in particular in a solvent.

There is an additional need to provide the skilled person with a new method to functionalize polymers comprising urethane and/or carbonate functions specifically on their surface in order to confer to said surface new physical and/or biochemical properties.

The present invention has for purpose to meet these needs.

Unexpectedly, the inventors have found that transcarbamoylation and transcarbonatation reactions may be implemented in mild conditions on the surface of polymers, especially of the polyurethane and polycarbonate type to modify their properties.

In other words, ready-to-use solution comprising at least one compound containing at least one hydroxyl group and a part thereof being able to confer said modified property to said surface of a polymer, have been developed for the present purpose.

Therefore, the present invention relates to a method for treating the surface of a polymer substrate to confer to said substrate surface a physical and/or biochemical surface-modified property, said polymer and/or copolymer containing in at least one of its repetitive units at least a function of formula (I): 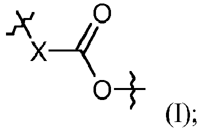 with X representing either -O- or a -NH- group, and
wherein it comprises at least a step consisting of exposing, within a solvent,
said substrate surface with at least one compound containing at least a hydroxyl group and a part thereof being able to confer said modified property to said substrate surface,
said step being carried out in efficient conditions to promote the covalent binding of said compound to said surface.

The invention also relates to a surface modified substrate essentially made of a polymer containing in at least one of its repetitive units at least a function of formula (I) as defined above, whose surface has been treated to confer to said substrate surface a physical and/or biochemical surface-modified property wherein it is obtainable by a method according to the present invention.

The invention furthermore concerns the use of a modified substrate as defined above for the production of medical devices or antifouling materials; or in the field of microfluidics, automotive, appliances and consumer goods, electronics or textile and artificial leather, preferably for the production of medical devices.

The inventors have found that unexpectedly the method of the present invention enables to quickly modify the surface properties of a polymeric substrate in a single step thus providing an improved biocompatibility to the so-obtained surface-modified substrate.

Moreover, according to a preferred embodiment the process is performed without any metallic catalysts that are known to be toxic, difficult to manipulate and could contaminate the surface.

Besides, the fact that the method of the invention is operated within a solvent advantageously allows a better control of the surface modification and avoids side reactions such as hydrolysis that degrades the substrate.

In the context of the present invention:
- the term "monomer" as used herein refers to a molecule or compound that usually contains carbon as its major component, is of relatively low molecular weight, and has a simple structure that is capable of assembling in polymeric chains by combination with itself or other similar molecules or compounds,
- the term "monomer unit" as used herein refers to a constitutional unit of a polymer, which is formed starting from a unique monomer,
- the term "polymer" as used therein denotes homopolymers as well as copolymers,
- the term "homopolymer" as used herein is defined as a polymer that is made up of only one type of monomer,
- the term "copolymer" as used herein is defined as a polymer that is made up of more than one type of monomer,
- the term "modified physical and/or biochemical property" refers to any physical and/or biochemical property which is different from the original property of the surface to be treated. A surface which has been treated and which exhibits a "modified physical and/or biochemical property" extends to a surface bearing reactive groups able to react with any reactive group on any biomolecule so biomolecules become covalently attached to the surface *via* the polymer,
- the term "biocompatible" as used herein refers to the capacity to be usable in biological environment in particular animal subjects, including humans. Biocompatibility may be achieved *via* various properties which are depending from the context of the application. For example, a substrate may be rendered biocompatible or may exhibit improved biocompatibility by improved protein/bacteria/cell repellency, by improved adhesion property or by introduction of any biological property which render the substrate compatible with its use in said biological environment, such as antithrombotic property,
- the term "biomolecule" as used herein encompasses any molecule known to be found in biological systems and includes amino acids, peptides, proteins, nucleic acids (including DNA and RNA), saccharides, polysaccharides, growth factors and glycoproteins. Biomolecule includes a biomolecule naturally occurring as well as a biomolecule which has been modified using techniques known from the man skilled in the art,
- the term "efficient conditions to" means the usual conditions to perform a chemical reaction defined by the usual parameters, i.e. temperature, solvent, duration, etc., which fall within the standard skills of a man of the art,
- The term "able to confer said modified property" refers to the ability to confer said given property which can be measured at the macroscopic and/or microscopic scale by known methods,

For simplification reasons, in the framework of the invention, the term "cytotoxic", which is employed to qualify the modified properties of the substrate should be deemed to include not only the bactericidal or antibiotic properties, but also virucidal, fungicidal or in general any bioactive substance that is cytotoxic to any living cell the elimination of which is desired. Moreover, the term "anti-adhesive properties" encompasses the properties imparting repellency to proteins, bacteries, viruses, cells etc ...

Still for simplification reasons, in the framework of the invention, the compound that confers the modifying properties, *i.e* the compound containing at least one hydroxyl group and a part thereof being able to confer a modified property to the surface substrate, is also named "reactive compound".

### FIGURES

Figure 1 depicts the reaction of transcarbamoylation as occurring at the surface of the polyurethane of example 1 herein after.
Figure 2 depicts the advancing and receding contact angles between a drop of water and pellethane^{®} and between a drop of water and the modified pellethane^{®} as prepared in example 1.
Figure 3 depicts the high resolution (C(1s)) X-ray photoelectron spectroscopy (XPS) analysis of modified pellethane^{®} (top) and unmodified pellethane^{®} (down) of example 1.
Figure 4 depicts the density of adhered bacteria on modified and unmodified surfaces in example 1.
Figure 5 depicts the normalized adsorption of proteins (albumin and fibrinogen) on modified and unmodified pellethane^{®} in example 1.
Figure 6 depicts the density of adhered MDCK cells on unmodified (left) and modified (right) pellethane^{®} in example 1.
Figure 7 depicts the evolution of the molar mass of carbothane^{®} as a function of time when exposed to the reaction conditions of example 2.
Figure 8 depicts the reaction of transcarbonatation as occurring at the surface of the polycarbonate of example 3 herein after.
Figure 9 depicts the ATR-FTIR spectra of modified carbothane^{®} (top) and unmodified carbothane^{®} (down) of example 3.
Figure 10 represents a carbothane^{®} polymer.

### POLYMER WITH -XCOO- REPEATING UNIT

In the framework of the present invention, carbonate and urethane groups are as follows:

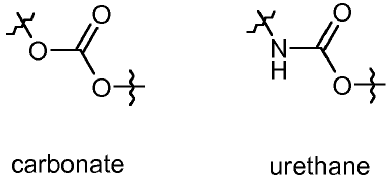

Therefore, with respect to formula 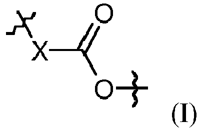 according to the present invention, when X is O, it designates a carbonate function, and when X is NH it designates a urethane function.

According to a particular embodiment, the polymer as considered in the present invention may comprise at least one repetitive unit that contains at least one carbonate function. Such a polymer is also called polycarbonate.

According to another particular embodiment, the polymer as considered in the present invention may comprise at least one repetitive unit that contains at least one urethane function. Such a polymer is also called polyurethane.

Still according to a further embodiment, the polymer as considered in the present invention may comprise only repetitive unit(s) that contain urethane function(s) and no carbonate function.

Still according to a further embodiment, the polymer as considered in the present invention may comprise only repetitive unit(s) that contain carbonate function(s) and no urethane function.

Alternatively, according to another embodiment, the method according to the present invention may be implemented on copolymers comprising both repetitive unit(s) that contain carbonate function(s) and repetitive unit(s) that contain urethane function(s). Such copolymer is also called a polymer of urethane/carbonate or polymer of polyurethane and polycarbonate.

As explained herein after, carbonates are able to react by transcarbonatation and urethanes are able to react by transcarbamoylation, with an alcohol in a solvent, preferably in the presence of a base.

All types of polyurethanes, polycarbonates and polymers of urethane/carbonate may be treated by the method according to the present invention.

It is also worth to notice that the polymer substrates to be treated may take all forms, for example material surfaces, films or particles.

As detailed below, the preferred polymers used in the present invention are polyurethanes based polymers, polycarbonates based polymers and polymers of polyurethane and polycarbonate.

Preferred polymer types are detailed herein after.

### POLYURETHANES BASED POLYMERS

Generally, all the polymers that are considered as polyurethanes, *i.e* any polymer comprising at least one repetitive unit that contains at least one urethane function may be used in the method according to the present invention.

In other words, any polymer comprising and/or made from a hard segment "isocyanate" and a soft segment "polyol" may be treated by the method of the present invention.

According to a preferred embodiment, the polyurethanes may be chosen among:
- aromatic or aliphatic polyether urethanes such as Pellethane^{®} (commercialized by Lubrizol), Tecoflex™ (commercialized by Lubrizol), Quadraflex™ (commercialized by Biomerics), Elasthane™ (commercialized by DSM) or Texin^{®} (commercialized by Covestro);
- aromatic or aliphatic polyester urethanes such as Estane^{®} (commercialized by Lubrizol) or Texin^{®} (commercialized by Covestro);
- aromatic or aliphatic polycarbonate urethanes such as Bionate^{®} (commercialized by DSM), Carbothane™ (commercialized by Lubrizol), Chronoflex^{®} (commercialized by AdvanSource biomaterials) or Quadrathane™ (commercialized by Biomerics);
- silicone polyethers urethanes or silicone polycarbonate urethanes such as CarboSil^{®} (commercialized by DSM), Pursil^{®} (commercialized by DSM), Chronosil^{®} (commercialized by AdvanSource biomaterials) or QuadraSil™ (commercialized by Biomerics); and
- aromatic rigid polyurethanes such as Isoplast^{®} (commercialized by Lubrizol) or Quadraplast™ (commercialized by Biomerics).

More particularly, the method according to the present invention may advantageously be carried out on
- aromatic or aliphatic polyether urethanes, preferably Pellethane^{®} (commercialized by Lubrizol) and Tecoflex™ (commercialized by Lubrizol); and
- aromatic or aliphatic polycarbonate urethanes, preferably Carbothane™ (commercialized by Lubrizol) and Chronoflex® (commercialized by AdvanSource biomaterials).

Among the commercialized polyurethanes which may be treated by the method according to the present invention, the following may be cited.

Pellethanes^{®} are polyurethanes sold by the company Lubrizol which may be used in the framework of the present invention and which are used in example 1. They are medical grade polymers.

### POLYCARBONATES BASED POLYMERS

Generally, all the polymers that are considered as polycarbonates, *i.e* any polymer comprising at least one repetitive unit that contains at least one carbonate function, may be used in the method according to the present invention.

According to a preferred embodiment, the polycarbonates may be chosen among:
- polycarbonates such as Makrolon^{®} (commercialized by Covestro), Apec^{®} (commercialized by Covestro), Lexan^{®} (commercialized by Sabic), Xantar^{®} (commercialized by Mitsubishi Engineering Plastics) or Durolon^{®} (commercialized by Unigel Plásticos);
- polycarbonate-acrylonitrile butadiene styrenes (ABS) or polycarbonate-polyester blends such as Bayblend^{®} (commercialized by Covestro) or Mackroblend^{®} (commercialized Covestro);
- polycarbonate urethanes chosen from aromatic or aliphatic polycarbonate urethanes such as Bionate^{®} (commercialized by DSM), Carbothane™ (commercialized by Lubrizol), Chronoflex® (commercialized by AdvanSource biomaterials) or Quadrathane™ (commercialized by Biomerics); and
- silicone polycarbonate urethanes such as CarboSil® (commercialized by DSM).

### POLYMERS OF POLYURETHANE AND POLYCARBONATE

These polymers are copolymers. They may be used in the method according to the present invention and may be of any type of copolymer, *i.e.* block copolymer, statistical copolymer or graft copolymer.

According to a particular embodiment, the following polymers of polyurethane and polycarbonate may be cited:
- polycarbonate urethanes chosen from aromatic or aliphatic polycarbonate urethanes such as Bionate^{®} (commercialized by DSM), Carbothane™ (commercialized by Lubrizol), Chronoflex® (commercialized by AdvanSource biomaterials) or Quadrathane™ (commercialized by Biomerics); and
- silicone polycarbonate polyurethanes such as CarboSil® (commercialized by DSM).

Carbothane^{®} as sold by Lubrizol is a family of aliphatic and aromatic, polycarbonate-based thermoplastic polyurethanes which may be used in the framework of the present invention and which is used in example 2 herein after.

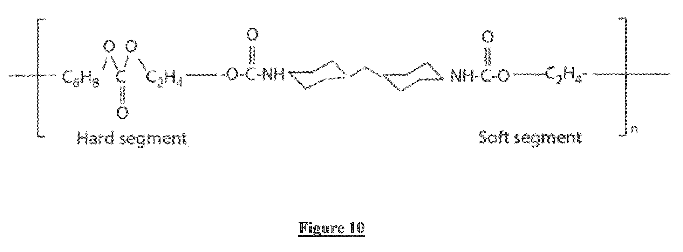

Figure 10 represents such a Carbothane^{®} polymer.

### MODIFIED PROPERTIES

The method according to the present invention allows the surface modification of polymers, especially of the polyurethane and polycarbonate type, in view of conferring it a wide range of physical and/or biochemical surface-modified properties.

In other words, for the sake of rendering polymers, especially of the polyurethane and polycarbonate type, usable in a broader range of technical applications, the method according to the present invention allows to confer to said polymer or copolymer among all: hydrophilic character; improved hydrophobic character, cytotoxic properties such as antibiotic, bactericidal, virucidal and/or fungicidal properties; cell-adhesion property; improved biocompatibility such as protein/bacteria/cell repellency or adhesion property; and reactivity property which renders said surface able to immobilize biomolecules.

According to a first embodiment of the present invention, the method of treatment is mainly dedicated to confer hydrophilic character to polymers, especially of the polyurethane and polycarbonate type. In such a case, the treated substrate can for instance find applications for the manufacture of optical articles, in particular synthetic glasses, lens; microfluidic devices; or medical devices, in particular catheters or guide wires to improve lubricity.

According to a second embodiment of the present invention, the method of treatment is mainly dedicated to confer improved hydrophobic character to polymers, especially of the polyurethane and polycarbonate type. In such a case, the treated substrate can find applications for the manufacture of clothings, fabrics or microfluidic devices for instance.

According to a third embodiment of the present invention, the method of treatment is mainly dedicated to confer antibacterial properties to polymers, especially of the polyurethane and polycarbonate type. In other words, said method prevents the formation of biofilms and the development of bacterial colonies.

In particular, when the method is dedicated to confer bactericidal properties to polymers, especially of the polyurethane and polycarbonate type, it can find applications in medical (clinical hospital and personal care), as well as in domestic and industrial (food industry for example) environments.

According to a fourth embodiment of the present invention, the method of treatment is mainly dedicated to confer improved biocompatibility such as protein/bacteria/cell repellency or antiadhesive properties to polymers, especially of the polyurethane and polycarbonate type. In such a case, the treated substrate can find applications for the manufacture of biomedical implants.

According to a fifth embodiment of the present invention, the method of treatment is mainly dedicated to confer reactivity property which render said surface able to immobilize biomolecules to polymers, especially of the polyurethane and polycarbonate type. In such a case, the treated polymer can find applications for the manufacture of biosensors, biodiagnostic, bioaffinity and related applications or of biomedical materials such as stents, shunts, catheters or lenses for example provided with coatings exhibiting for example antithrombogenic or antifouling properties.

### METHOD OF TREATMENT

The present invention benefits from transcarbamoylation and transcarbonatation reactions. Such reactions are well known to the man skilled in the art.

### Transcarbamoylation

Transcabamoylation may also classically be named transurethanisation, transcarbamation, transurethane reaction or transesterification of urethanes.

Namely the transcarbamoylation may be represented in the following scheme 1.

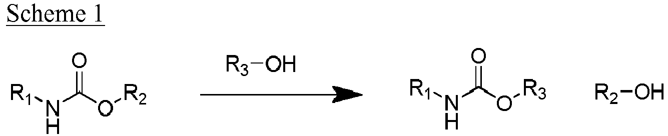

As it is apparent on this scheme, it is as if an exchange was occurring between the radical R₂ and the radical R₃.

The R₃-OH indeed attacks the electrophilic carbon of the carbonyl group, resulting in the departure of the O-R₂ radical and thus to the formation of a new carbamate. As the reaction occurs in the framework of the present invention on the surface of a polymer, the polymeric chain is therefore interrupted on each attacked carbonyl group and a group comprising the modifying property group is covalently bound to the carbonyl group.

### Transcarbonatation

Transcarbonatation may also classically be named transcarbonation, transesterification of carbonate esters, carbonate exchange reaction or carbonate alcoolysis.

Namely the transcarbonatation may be represented in the following scheme 2.

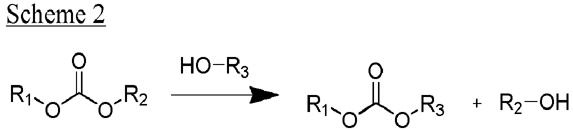

### Reaction Conditions

The reaction conditions may be chosen in such a manner that a sufficient amount of polymer chains are interrupted and that a modification of the surface properties occurs. They are also chosen in such a manner that not a too big part of the carbonyl groups of the surface is attacked in order to avoid damaging the surface. It clearly belongs to the expertise of the skilled artisan to determine such reactional conditions.

Such reactions conditions are mainly constituted by a compromise between the base, the solvent, the molar ratio between the substrate and the reactive compound, the temperature and the reaction time. In other words, the conditions should be preferably chosen so as to achieve a solvatation of the polymer chains on the surface of the polymer but so as to avoid a degradation of the polymer in mass, and of course on the whole depth of the polymer.

According to a preferred embodiment, the step of exposing the surface substrate to be treated with the reactive compound is carried out by dipping the substrate into a solution containing at least the solvent and the reactive compound.

According to a preferred embodiment, the reaction is performed in the presence of a base. In this case, it clearly belongs to the expertise of the skilled artisan to determine the kind of base and the amount that has to be introduced in correlation with the other reactional conditions to arrive at the expected result.

According to a further particular embodiment of the present invention, the reaction is performed without the presence of an organometallic catalyst.

As a general remark, it is described that the carbonate functions are much more reactive that the urethane functions, as illustrated in example 2. Namely, in said example, in the reported reaction conditions, only the carbonate functions are able to react with the alcohol.

It follows that depending of the nature of the functions present in the polymer or copolymer to which the method according to the present invention is applied; the suitable reaction conditions will have to be adapted for achieving efficient conditions to promote the covalent binding of the compound containing a hydroxyl group to the surface of the considered polymer.

Guidance for such conditions, which are mainly depending on the choice of the base, the solvent, the reaction time and the temperature, is given herein after.

As illustrated in the examples, the modified surface may be characterized by ATR-FTIR analysis, by contact angle measurements of a drop of water (this method enables to point out differences in terms of hydrophilicity between two surfaces) or by XPS analysis, to show that the reaction occurred.

### Base

According to a particular embodiment of the present invention, the method according to the present invention is carried out in the presence of a base.

The transcarbamoylation and transcarbonatation reactions may be performed using a wide variety of bases, which play the role of a catalyst.

Among said bases, the following inorganic bases may be cited: *n*-butyllithium (*n*-BuLi), *sec*-butyllithium (*sec*-BuLi), *tert*-butyllithium (*tert*-BuLi), calcium hydride (CaH₂), sodium hydride (NaH), carbonates (for example calcium carbonate (CaCO₃), sodium carbonate (Na₂CO₃), potassium carbonate (K₂CO₃)), sodium methoxide (NaOMe), sodium ethoxide (NaOEt), potassium hydroxide (KOH), sodium hydroxide (NaOH), lithium hydroxide (LiOH), calcium hydroxide Ca(OH)₂, barium hydroxide (Ba(OH)₂) and potassium tert-butoxide (*t*BuOK) and preferably NaH.

Such inorganic bases are more particularly suitable for the modification of polymer surfaces *via* a transcarbamoylation reaction according to the present invention.

Some organic bases may also be used in the present invention such as tertiary amines (for example triethylamine (Et₃N), *N,N,N',N'*-tetramethylethylenediamine (TMEDA), *N,N,N'*;*N'',N"*-pentamethyldiethylenetriamine (PMDTA) or Bu₃N), secondary amines (for example Et₂NH), primary amines (for example EtNH₂, BuNH₂) or cyclic amines such as 1,5,7-triazabicyclo[4.4.0]dec-5-ene (TBD), 1,8-diazabicyclo[5.4.0]undec-7-ene (DBU), 1,4-diazabicyclo[2.2.2]octane (DABCO), 1,5-diazabicyclo[4.3.0]non-5-ene (DBN), 4-dimethylaminopyridine (DMAP) or pyridine.

Such organic bases are more particularly suitable for the modification of polymer surfaces *via* a transcarbonatation reaction according to the present invention.

Among all these bases, potassium hydroxide (KOH), potassium tert-butoxide (*t*BuOK), sodium hydride (NaH), lithium hydroxide (LiOH), barium hydroxide (Ba(OH)₂), triethylamine (Et₃N) and 1,5,7-triazabicyclo[4.4.0]dec-5-ene (TBD) are particularly preferred, and more particularly NaH and TBD. In particular, NaH may be preferably used in case of a transcabamoylation reaction and TBD may be preferably used in case of a transcarbonatation reaction.

The inventors have observed that the concentration used of compound containing at least one hydroxyl group and a part thereof being able to confer a modified property, such as a PEG as detailed herein after, can be lowered when the base is *t*BuOK.

When a base is used according to the method of the invention it may be introduced in an amount such that:
- the molar ratio between the reactive compound and the base (reactive compound/base) ranges from 1000 to 0.01, preferably from 100 to 0.1 and even more preferably from 10 to 1.
- the content of base ranges from 0.0001 to 10 mol/L, preferably from 0.001 to 1 mol/L and even more preferably from 0.01 to 0.5 mol/L when the surface of polymer to be treated ranges from 0.01 to 100 cm², preferably from 0.05 to 50 cm² and even more preferably from 0.1 to 10 cm².

### Solvent

As above mentioned the choice of the solvent is important for the method according to the present invention.

More particularly, the solvent should not dissolve the polymer to be reacted at its surface. It should rather have a low solvating power in order to only solvate the surface of the polymer substrate or even the extreme surface of said surface in order to avoid decreasing the mechanical properties of the material. The solvent may also be chosen such that it enables the dissolution of the reactive compound while being unreactive towards both the reactive compound and the polymer substrate.

For obvious reasons, said solvent should also have a higher boiling point than the reaction temperature and be as less toxic as possible.

It clearly belongs to the expertise of the skilled artisan to determine a convenient solvent for the method according to the present invention with respect to the nature of the substrate, of the reactive compound and of the reaction temperature.

Since protic solvents are likely to react with the polymeric substrate, aprotic solvents are much more preferred in the framework of the present invention. However in some cases some protic solvents may be convenient to perform the method of the invention and may thus also be used.

Various solvents may be used to implement said reactions. According to an embodiment of the present invention toluene or acetonitrile may be used for the performance of said reactions.

### Reactive compound

Generally, the amount of reactive compound used is adjusted such that it is in a large excess with respect to the amount of the polymer surface to be treated.

It clearly belongs to the expertise of the skilled artisan to determine an amount of reactive compound that is suitable for the method according to the present invention. More particularly, he is able to adapt the amount of reactive compound to use in accordance with the expected modified properties for the treated surface.

In particular, the reactive compound used according to the method of the invention may be introduced in a concentration ranging from 1.10⁻⁷ to 20 mol/L, preferably from 5.10⁻⁷ to 5 mol/L and even more preferably from 1.10⁻⁶ to 1 mol/L.

### Reaction time

The reaction time may range between 1 s and 24 h, in particular between 1 min and 8 h, and even more particularly between 5 min and 4 h.

### Temperature

According to a particular embodiment, the method according to the present invention may be implemented at a temperature greater than 30°C, in particular greater than 40°C, more particularly greater than 50°C.

According to another particular embodiment, the method according to the present invention may be implemented at a temperature ranging from 0°C to 100°C, in particular at a temperature ranging from 20°C to 80°C, and even more particularly at a temperature ranging from 20°C to 60°C.

More particularly, when the method according to the present invention is carried on a polyurethane surface, it may be implemented at a temperature ranging from 40 to 80°C.

When the method according to the present invention is carried on a polycarbonate surface or on a polymer of polyurethane and polycarbonate surface, it may be implemented at a temperature ranging from 20 to 80°C.

Indeed the polymer to which the method of the present invention is applied should for example not melt. Therefore temperatures above the melting point of the polymer should preferably be avoided.

### COMPOUND CONFERING THE MODIFYING PROPERTIES

According to the present invention, the compound conferring the modifying properties, also named the "reactive compound", is a compound containing at least one hydroxyl group and a part thereof being able to confer a modified property, *i.e.* a modified physical and/or biochemical property.

In the framework of the present invention, a large variety of molecules and polymers may be grafted on the surface of a polyurethane, a polycarbonate and a polymer or polyurethane and polycarbonate.

In particular the reactive compound may comprise an alcohol moiety and a part of said compound may be able to modify the property of the surface of a polyurethane or polycarbonate substrate.

The said reactive compound may in particular comprise a polymeric chain.

Said polymeric chain may either be a homopolymeric chain or a copolymeric chain.

In the case of a reactive compound comprising a polymeric chain, the part of the reactive compound conferring the modifying property may come from the polymeric backbone or from the lateral chains.

In the case of a reactive compound comprising a polymeric chain, the alcohol moiety may either be a terminal group or a group that is present in a repetitive unit. In the specific case of a reactive compound that is a copolymer the alcohol moiety may either be a terminal group or a group that is present in one or more of the repetitive units.

Still in this case, the hydroxyl group is preferably a terminal group of the polymeric chain.

According to a particular embodiment, the chain backbone of polymers or copolymers may be chosen among:
- polyethylene,
- polyacrylamide,
- polyacrylate,
- polyvinyl derivatives (e.g. polyvinylpyrrolidone),
- polystyrene,
- polyalcohol (e.g. polyvinylalcohol, polyallylalcohol),
- polyvinylbenzyl,
- polyamine (such as polyethyleneimine, polyallylamin),
- polymethacrylate (such as polymethylmethacrylate),
- polymethacrylamide,
- polyether (e.g. polyethylene glycol),
- polyester (e.g. poly(DL-lactide)),
- polyamide,
- polyurethane,
- poly(ethylene-*alt*-succinimide),
- polysaccharide derivatives (such as dextran, cellulose, hydroxyethylcellulose, methylcellulose),
- polyureas, and
- poly(diallyldimethylammonium).

More specifically:
- among the polymeric backbone conferring hydrophilic properties, the following may be cited: polysaccharides, polysaccharide derivatives such as methylcellulose or dextran, polyvinylpyrrolidones, polyacrylates, polymethacrylates, polyalcohols in particular polyvinylalcohols and their derivatives such as poly(methyl vinyl ether), or polymethacrylamides backbones;
- among the polymeric chain backbone conferring anti-adhesive properties, the following may be cited: polyvinylpyrrolidones, polyalcohols in particular polyvinylalcohols and their derivatives such as poly(methyl vinyl ether), polysulfobetaines, polycarboxybetaines, polysaccharides, polysaccharide derivatives such as methylcellulose or dextran, polyethylene glycol or poloxamers;
- among the polymeric chain backbone conferring hydrophobic properties, the following may be cited: polystyrenes, polyvinylbenzyls or perflorinated derivatives;
- among the polymeric chain backbone conferring an improvement of biocompatible properties *via* protein/bacteria/cell repellency, the following may be cited: polyethers, polysulfobetaines, polycarboxybetaines, polyvinylpyrrolidones, polyalcohols in particular polyvinylalcohols and their derivatives such as poly(methyl vinyl ether), polysaccharides, polysaccharide derivatives such as methylcellulose or dextran or poloxamers.

According to a preferred embodiment, the polymeric chain is chosen from polysaccharide, modified polysaccharides such as methylcellulose, polysulfobetaine, polycarboxybetaine, polyvinylpyrrolidone, polyethylene glycol and poloxamer.

Also more specifically, among the lateral chain that may impart a modifying property the following ones may be cited:
- lateral chain imparting improved hydrophilic properties, i.e. for example containing monosaccharides, zwitterionic (betaïne and phosphocholine derivatives) moieties or polymer chains of water-soluble polymers; polyethylene glycol (PEG); amino-terminated polyethylene glycol (PEG-NH₂); polypropylene glycol (PPG); polypropylene oxide (PPO); polypropylene glycol bis(2-amino-propyl ether) (PPG-NH₂); polyalcohols, for example polyvinylalcohol; polysaccarides (e.g. dextran cellulose) and related compounds; poly(vinyl pyridine); polyacids, for example poly(acrylic acid); polyacrylamides e.g. poly(N-isopropylacrylamide) (polyNIPAM) and polyallylamine (PAM),
- lateral chain imparting improved hydrophobic properties, i.e. for example containing fluorinated groups, (C₁-C₁₀)alkyl groups,
- lateral chain imparting improved biocompatible properties *via* protein repellancy, *i.e.* for example containing polyethylene glycol (PEG), polysarcosine, polyvinylpyrrolidone, sulfobetaine, carboxycellulose, mono- or oligosaccharide,
- lateral chain imparting improved adsorption resistance, *i.e.* for example containing polyethyleneglycol (PEG), phosphorylcholines, sulfobetaines or carboxybetaines,
- lateral chain imparting antibiotic, bactericidal, virucidal properties, which may contain aminopenicillanic acid that is known to interact with cell membranes,
- lateral chain imparting bactericidal properties, which may contain positively charged groups such as quaternary ammonium groups, quaternary phosphonium groups guanidinium groups, imidazolium groups and sulfonium groups,
- lateral chain imparting virucidal properties, which may contain quaternary ammonium groups (especially for bacterial viruses), quaternary phosphonium groups and guanidinium groups, imidazolium groups and sulfonium groups,
- lateral chain imparting fungicidal properties, which may contain quaternary ammonium groups, quaternary phosphonium groups, guanidinium groups, imidazolium groups and sulfonium groups, and
- lateral chain imparting anticoagulant properties, which may contain heparine, heparine derivatives and fluorinated alkyl groups.

Said polymeric chain backbone may be of homopolymeric or copolymeric nature.

### Preferred embodiments of reactive compounds

The selection of said chain backbone can vary according to the required effect of the reactive compound in view of the desired properties for the surface of the substrate.

According to a particular embodiment of the present invention, the part of said compound being able to modify the surface property may be polyethylene glycol (PEG) or poloxamers, which confer anti-adhesive properties.

PEG with a molar mass higher than 500 g/mol, preferably higher than 1000 g/mol are more particularly preferred. They may be functionalized or not. They may be methylated or not. They may also be linear or branched. PEG based copolymer such as pluronics are also suitable for the present invention.

With respect to PEG, the following may be more particularly implemented: PEG2000.

Poloxamers are nonionic triblock copolymers composed of a central hydrophobic chain of polyoxypropylene (poly(propylene oxide)) flanked by two hydrophilic chains of polyoxyethylene (poly(ethylene oxide)). Poloxamers are also known by the trade names Synperonics, Pluronics, and Kolliphor.

Said PEG and poloxamer may present a molecular weight ranging from 500 g/mol to 1 000 000 g/mol, in particular from 500 g/mol to 100 000 g/mol, and more particularly from 1000 g/mol to 10 000 g/mol.

According to a particular embodiment, the compound conferring the modifying properties is able to confer anti-adhesive properties.

According to a particular embodiment, the compound containing at least a hydroxyl group according to the present invention comprises a polymeric chain selected from polysaccharides, polysaccharide derivatives such as methylcellulose or dextran, polyvinylpyrrolidones, polyacrylates, polymethacrylates, polyalcohols in particular polyvinylalcohols and their derivatives such as poly(methyl vinyl ether), or polymethacrylamides.

According to a particular embodiment of the present invention, the part of said compound being able to modify the surface property may be chosen from polyvinylalcohols and their derivatives such as poly(methyl vinyl ether), polysaccharides and polysaccharide derivatives. These compounds are able to confer anti-adhesive properties, hydrophilic properties and/or an improvement of biocompatible properties of the treated surface.

### SURFACE-MODIFIED SUBSTRATE

The present invention further relates to a polymer, in particular of the polyurethane or polycarbonate type, provided with a given property, such as previously recited, obtainable by a method according to the present invention.

According to a particular embodiment it relates to a polymer, preferably of the polyurethane or polycarbonate type, to which at least one of the following properties can be conferred by a proper chemical treatment: hydrophilic character; improved hydrophobic character, cytotoxic properties such as antibiotic, bactericidal, virucidal and/or fungicidal properties; cell-adhesion property; improved biocompatibility such as protein/bacteria/cell repellency or anti-adhesive property; improved blood compatibility such as anticoagulant properties; and reactivity property which renders said surface able to immobilize biomolecules.

Said treated polymer does not request particular storage conditions to keep its modified properties. The surface treatment is indeed advantageously resistant to water and other solvents up to certain limits and is to be noticed that said modified-property. In particular the surface treatment may last six months or even one year or more.

When the polyurethane and/or polycarbonate substrate may be used to promote cell-adhesion without bactericidal activities, the density of active sites has to be adjusted with respect to the chemical nature of the considered reactive compound and more particularly by taking account its cytotoxic power. This adjustment may be performed by the man skilled in the art.

The antimicrobial activity of modified surfaces has then been tested against E. *coli* bacteria as illustrated in example 1.

The invention more particularly relates to a method for modifying polyurethane and/or a polycarbonate substrate endowed with anti-adhesive properties characterized in that the compound comprising a hydroxyl group and a part thereof being able to confer said modified property is a PEG.

The anti-adhesive property can for example be evaluated by epifluorescence microscope observation.

It has been demonstrated and illustrated in example 1 that substrates treated with PEG, and in particular PEG2000 can suppress the adhesion of *E. coli* bacteria.

A treated substrate may be treated again one or several times according to the method as described above. Said substrates are also encompassed within the scope of the present invention.

In particular, as shown in example 1, some polymers substrates that have been treated on their surface according to the method of the present invention exhibit strongly improved anti-adhesive properties compared to the same substrate which has not been treated.

Indeed some surface-modified substrates, after having been put in contact with some bacteria show a density of adhered bacteria on their surface at least 50 times, preferably at least 100 times, more preferably at least 200 times lower than the density measured on the unmodified substrate.

Some surface-modified substrates, after having been put in contact with some proteins show a surface concentration of absorbed protein at least 2 times, preferably at least 4 times, more preferably at least 7 times lower than the concentration measured on the unmodified substrate.

Some surface-modified substrates, after having been put in contact with MDCK cells show a density of adhered MDCK cells on their surface at least 100 times, preferably at least 300 times, more preferably at least 400 times lower than the density measured on the unmodified substrate.

### USE OF THE TREATED POLYMER

The present invention also encompasses the use of the surface-modified polymer of the invention described above, and which can be obtained by the method described above and illustrated in the following examples.

Various industrial fields may implement the treated polymer according to the present invention, such as health, hygiene and agro-alimentary industries.

Examples of uses may be listed herein after:
- using a treated polymer for the production of medical devices such as vascular grafts, aortic grafts, arterial, venous, or vascular tubing, vascular stents, dialysis membranes, tubing, blood oxygenator tubing or membranes, ultrafiltration membranes, intra-aortic balloons, blood bags, catheters such as vesical/rectal catheters, epidural and perineural catheters, sutures, soft or hard tissue prostheses, synthetic prostheses, prosthetic heart valves, tissue adhesives, cardiac pacemaker leads, artificial organs, endotracheal tubes, lenses for the eye such as contact or intraocular lenses, blood handling equipment, apheresis equipment, enteral feeding devices, gastric tubes, nasal ventilation, nasal packing, diagnostic and monitoring catheters and sensors, biosensors, dental devices, drug delivery systems, infusion line accessories such as connectors, bidirectionnal valves, extension and needle hub or bodily implants of any kind;
- using a treated polymer for the production of antifouling materials (e.g. inflatable boats or surfboards);
- using a treated polymer in the field of micro fluidics;
- using a treated polymer in the field of automotive (e.g. automotive lighting, head lamp lenses, dashboards or interior cladding);
- using a treated polymer in the field of appliances and consumer goods (e.g. water dispensers, garden equipment or furniture);
- using a treated polymer in the field of electronics (e.g. mobile phones, electrical chargers or lighting); and
- using a treated polymer in the field of textile and artificial leather.

Preferably the surface-modified polymer of the invention is used for the production of medical devices.

The following examples illustrate the present invention.

### EXAMPLES

### Example 1: Preparation, characterization and efficiency tests of polyurethane with an antiadhesive surface

### 1.1. Preparation of the polyurethane modified at its surface

The used polyurethane is pellethane^{®} 2363 AE80, as commercialized by Lubrizol.

Transcarbamoylation reaction of urethanes was used to efficiently modify polyurethane surfaces and confer them antiadhesive properties. Poly(ethylene glycol) (PEG) was grafted to the surface in a single step reaction. The formation of a polymer brush at the surface of the substrate conferred it with anti-fouling properties.

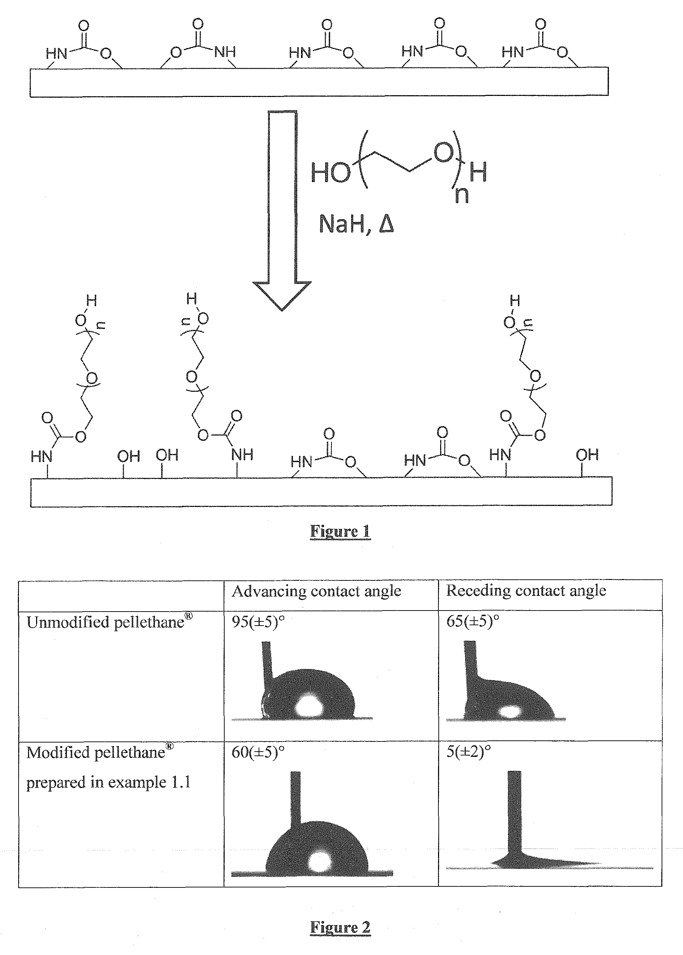

Figure 1 depicts the reaction as occurring at the surface of the polyurethane.

The surface is modified by transcarbamoylation reaction between PEG2000 and surface urethanes.

PEG2000 (1g) (commercialized by Alfa Aesar) was dried under vacuum at 60°C for 4 hours. Then it was dissolved in acetonitrile (ACN) (commercialized by Carlo Erba, dry HPLC grade) (20 mL) in a 50 mL round bottom flask equipped with a stirring bar. Sodium hydride (NaH) (12 mg) (commercialized by Sigma-Aldrich) was added under stirring and the flask was put under argon atmosphere. The solution was stirred for 1 hour at 20°C to form the reactive PEG alcoolate. Then, the polyurethane film (surface of pellethane 2363AE80^{®} of dimensions in the order of 1x1x0.1 cm) was dipped into the solution and the whole was heated at 60°C for 15 min under agitation. The polyurethane films were taken out of the solution and dipped into an acetonitrile bath for 10 min, followed by an isopropanol bath for 10 min and finally a distilled water bath for 16 hours. Then the modified polyurethane films were dried in an oven at 60°C for 16 hours.

### 1.2. Characterization of the modified surface by contact angle measurement

Dynamic contact angle between a drop of water and modified pellethane^{®} as prepared at point 1.1 was measured using a digidrop goniometer. Advancing and receding contact angles were measured. These results have been compared to the dynamic contact angle between a drop of water and unmodified pellethane^{®} commercialized by Lubrizol.

The lower the value of dynamic contact angle, the more hydrophilic the polyurethane.

Advancing and receding contact angles with the modified pellethane^{®} as prepared at point 1.1 was respectively 60° and 5° whereas these values are respectively 95° and 65° with the unmodified pellethane^{®}, thus confirming the modification of the surface.

Figure 2 depicts the advancing and receding contact angles between a drop of water and pellethane^{®} and between a drop of water and the modified pellethane^{®} prepared at point 1.1 above.

As a result, the modification of the surface was confirmed as far as the modified pellethane^{®} prepared at point 1.1 is more hydrophilic than the unmodified pellethane^{®}.

### 1.3. Characterization of the modified surface by IR

The modified polyurethane prepared at point 1.1 and the unmodified polyurethane were analyzed using an ATR-FTIR Nicolet Magna IR550 spectrometer. An average of 5 spectra was calculated.

The transmittance results are gathered in table 1 as follows.

**Table 1**

| **Transmittance results** | | | | |
|---|---|---|---|---|
| attribution | ν(cm⁻¹) | Unmodified pellethane^{®} | Modified pellethane^{®} | Difference (%) |
| C=O, urethane, non bonded | 1729 | 64,3 | 66,2 | -1,9 |
| C=O, urethane, bonded | 1700 | 41,9 | 46,9 | -5 |
| C=C aromatic ring | 1596 | 67,9 | 71,6 | -3,7 |
| N-H+C-N, amide | 1528 | 27,4 | 34,4 | -7 |
| C-C aromatic ring | 1413 | 55,6 | 61,2 | -5,6 |
| | 1309 | 52,3 | 56,1 | -3,8 |
| C-N urethane | 1219 | 15,8 | 22,7 | -6,9 |
| C-O-C, aliphatic ether | 1104 | 10,9 | 10,1 | +0,8 |
| C-O-C of C-O-C=O, urethane | 1075 | 10,1 | 11,1 | -1 |

The difference of values between modified and unmodified polyurethane clearly show that the pellethane^{®} obtained at point 1.1 is different from the initial pellethane^{®}.

### 1.4. XPS analysis

XPS analysis was performed on the modified and unmodified pellethanes^{®} of example 1.1 using an ESCALAB 250 spectrometer (Thermo Electron Corporation).

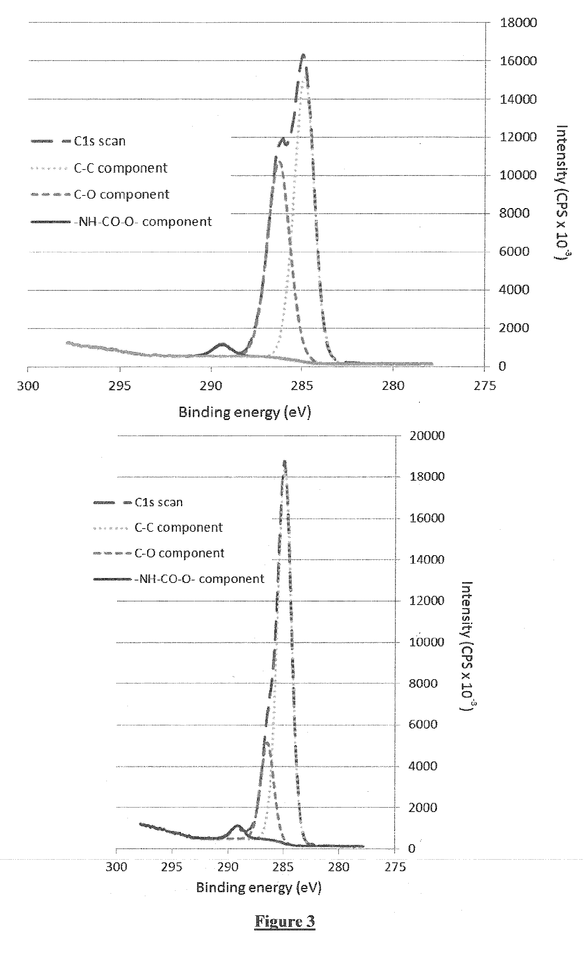

Figure 3 depicts the high resolution XPS analysis of modified pellethane^{®} (top) and unmodified pellethane^{®} (down) of example 1.1.

Said XPS analysis proved the presence of PEG on the surface.

### 1.5. Determination of bacterial adhesion

*In vitro* assays: Bacterial adhesion was tested (divided by 200 for *E. coli* MG1655GFP).

Bacterial adhesion onto surfaces can be quantified *in vitro* using a direct observation of surfaces after incubation with bacteria. Following pre-incubation in phosphate buffer saline (PBS), the surfaces are placed in a solution of *Escherichia coli (E. coli* MG1655 GFP) which has been diluted overnight from a culture to a concentration of 1-5x10⁸ CFU/mL in Luria-Bertani (LB) broth.

The surfaces are incubated at 37°C under gentle agitation (50 rpm) for 2 hours. After incubation, the surfaces are washed in PBS for 2x10 min at 70 rpm to remove non adhered bacteria. Then, the surfaces are observed using an epifluorescence microscope equipped with x20 and x40 objectives (Leica DMRX upright optical microscope equipped with a Retiga EXi CCD camera (QImaging, USA)). 10 pictures are taken for each sample and the number of bacteria per picture is calculated using the Image-Pro software. The average density of bacteria is calculated and compared to a control surface, usually unmodified pellethane^{®}.

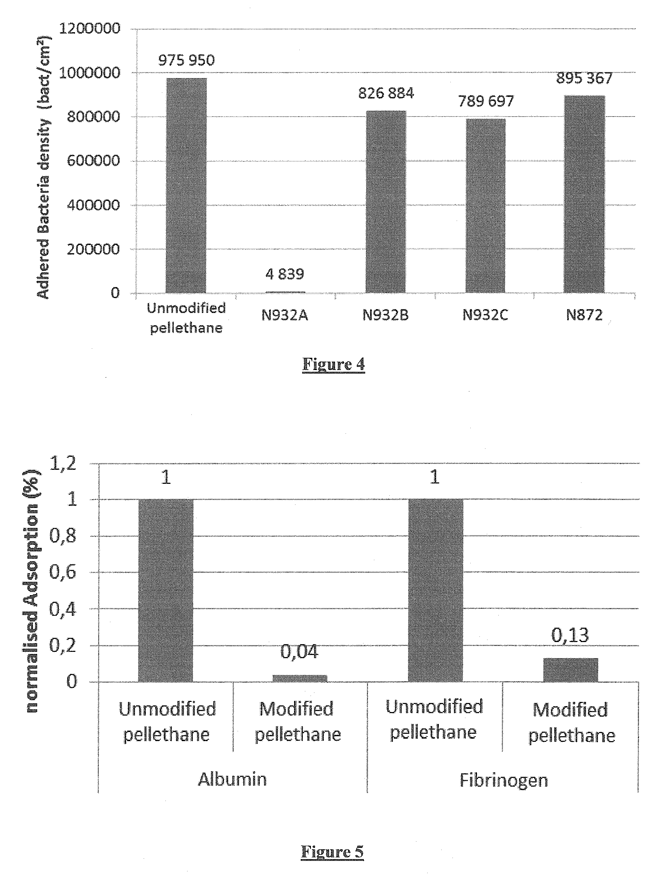

The following conditions were implemented and the corresponding densities calculated as depicted on figure 4 and also confirmed by microscopy pictures.

### Conditions of modification

*N932A:* conditions of example 1.1.
*N932B:* conditions of example 1.1 but without NaH
*N932C*: conditions of example 1.1 but without PEG
*N872*: conditions of example 1.1 but with PEG2000 dimethyl ether (supposed to be non-reactive) instead of PEG2000.

Figure 4 shows that the only efficient surface to reduce the adhesion of bacteria is the surface prepared in example 1.1 (N932A). Indeed, the density of adhered bacteria on this surface is more than 200 times lower than the density measured on the unmodified pellethane^{®}.

The density of bacteria adhered on the other surfaces is of the same order of magnitude as on the unmodified pellethane^{®} thus showing the importance of the reactional conditions to modify the polyurethane surface.

Indeed, a surface modified without a basis (see N932B) or without any alcohol (see N932C and N872) does not enable to decrease bacterial adhesion.

### 1.6. Adsorbed protein on the surface

The ability of a surface to avoid protein adsorption can be evaluated by measuring the quantity of adsorbed proteins on the surfaces. Protein adsorption on surface can be quantified using fluorescent proteins and a spectroscopic analytical method. The surfaces are washed in ethanol, dried and equilibrated in phosphate buffered saline (PBS) for 2 hours. Then, they are dipped into a freshly prepared solution of fluorescent protein (1 mg/mL) and incubated under gentle stirring at 37°C for 2 hours. The surfaces are washed with PBS (3 baths of 5 min) and transferred to an Eppendorf tube containing an aqueous solution of cetyltrimethylammonium bromide (CTAB) (10 mg/mL) and sodium bicarbonate (NaHCO₃) (0.1M). The Eppendorf tube is sonicated for 15 min at 30°C. The fluorescence of the solutions is then measured using a spectrofluorometer (JOBIN-YVON, Fluoromax) and compared to the calibration curve obtained by measuring the fluorescence of the same protein in different concentrations (from 6.25 ng/mL to 1 mg/mL) in the same solution of CTAB and NaHCO₃. The concentration of proteins in the solution is calculated and converted into surface concentration of adsorbed protein.

This experiment has been conducted with two fluorescent proteins, albumin and fibrinogen.

In both cases the concentration of adsorbed protein has been measured with the pellethane^{®} commercialized by Lubrizol also called "unmodified pellethane^{®} (control) and with the surface-modified pellethane^{®} obtained at point 1.1, also called "modified pellethane^{®}".

Figure 5 shows the obtained results in which the adsorption result has been normalized to the value of 1 for the control measurement.

Figure 5 clearly shows that the protein adsorption was drastically lowered for both fibrinogen and albumin.

Indeed the surface concentration of adsorbed albumin is 25 times lower on the modified pellethane^{®} than on the unmodified pellethane^{®}.

The surface concentration of adsorbed fibrinogen is more than 7 times lower on the modified pellethane^{®} than on the unmodified pellethane^{®}.

### 1.7. Cell adhesion of MDCK cells

MDCK cell adhesion on surfaces is measured by incubating the surfaces in culture medium (Dulbecco's Modified Eagle Medium (DMEM) + 10% fetal bovine serum (FBS) + 5mL pen/strep + 0.4 mg/mL geneticin) and inoculating the medium with cells. After 2h of incubation at 37°C to allow the cells to adhere to surfaces, the old medium is removed and fresh medium is added and the surfaces are incubated at 37°C in a 5% CO₂ atmosphere for 72 hours or more until confluence is reached on the control surface. At this point, the surfaces are transferred to a PBS bath for 10 min, then the cells are colored with calcein acetoxymethyl and observed with an epifluorescence microscope equipped with x20 and x40 objectives (Leica DMRX upright optical microscope equipped with a Retiga EXi CCD camera (QImaging, USA)).

The density of adhered MDCK cells has been evaluated with the pellethane^{®} commercialized by Lubrizol also called "unmodified pellethane^{®} (control) and with the surface-modified pellethane^{®} obtained at point 1.1, also called "modified pellethane^{®}".

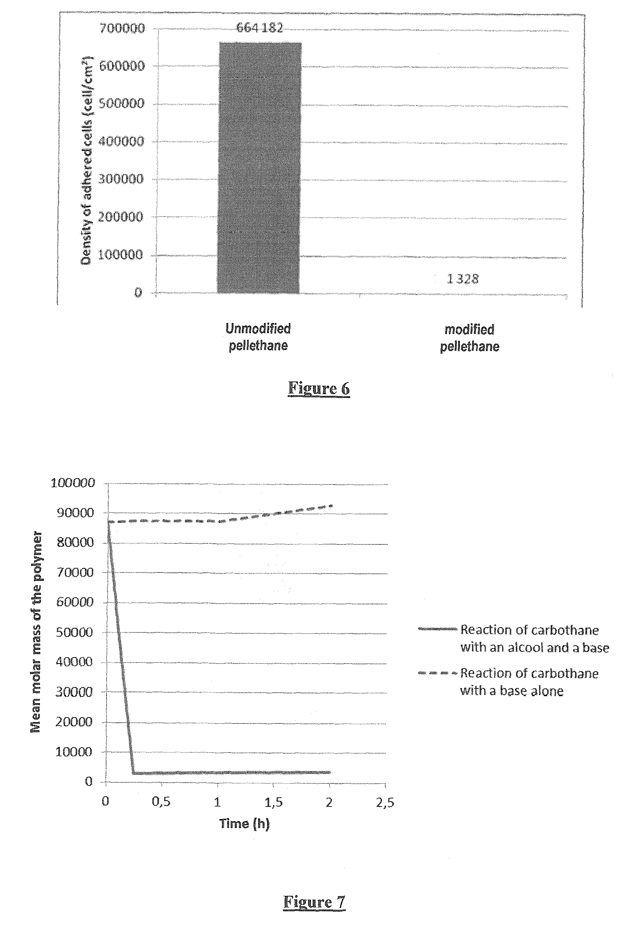

The results obtained are represented in Figure 6.

Cell adhesion of MDCK cells was strongly reduced as demonstrated on figure 6 and also confirmed by microscopy pictures.

Indeed, the density of adhered MDCK cells is 500 times lower on the modified pellethane^{®} than on the unmodified pellethane^{®}.

### Example 2: Transcarbonatation of carbothane^{®}

A first experiment was performed for proving the reactivity of the polycarbonate in a transcarbonatation reaction condition, *i.e.* in presence of an alcohol and a base. The evolution of the molar mass of the polymer was followed as a function of time.

### Material and methods

Carbothane PC3595A^{®}, which is a polyurethane comprising polycarbonate segments, is dissolved in tetrahydrofuran at a concentration of 20 mg/mL. After complete dissolution of the polyurethane, 1 mL of butanol is added to the reaction mixture. Then 50 mg of 1,5,7-Triazabicyclo[4.4.0]dec-5-ene is added as a base and the reaction mixture is stirred at 20°C for 2h. The mean molar mass of carbothane^{®} is followed by size exclusion chromatography (SEC).

As a comparative experiment, carbothane^{®} is contacted with the base alone: 400 mg of carbothane® PC3595A is dissolved in tetrahydrofuran (20 mL) and 50 mg of 1,5,7-Triazabicyclo[4.4.0]dec-5-ene is added as a base. The reaction mixture is stirred at 20°C for 2h and the mean molar mass of the carbothane^{®} is monitored by size exclusion chromatography.

Size exclusion chromatography (SEC) of polymers was performed in THF at 35°C using an Agilent 1260 Infinity Series GPC (ResiPore 3 µm, 300 x 7.5 mm, 1.0 ml/min, UV (250 nm) and RI (PL-GPC 220) detectors). The number average molecular masses (*M*ₙ) of the polymer was calculated with reference to a universal calibration vs. polystyrene standards (limits *M*_{w} = 200 to 400,000 g/mol).

As reported in figure 7, the evolution of the molar mass shows that chain interruptions intervene demonstrating that a reaction occurs indeed.

It is also worth to notice that without contacting alcohol, no reaction occurs.

As another comparative experiment, when pellethane^{®} is used (*i.e.* without polycarbonate segments), in the same conditions, no molar mass decrease is observed. This shows that the chain interruption indeed takes place on the polycarbonate segments.

This example demonstrates that transcarbonatation indeed occurs at the polymer scale.

### Example 3: Preparation, characterization and efficiency tests of a polymer of polyurethane and polycarbonate with a modified surface

### 3.1. Preparation of the polymer modified at its surface

Transcarbonatation of a carbothane^{®} polymer was used to efficiently modify the polymer surface and confer them antiadhesive properties. Poly(ethylene glycol) (PEG) was grafted to the surface in a single step reaction. The formation of a polymer brush at the surface of the material conferred it with anti-fouling properties.

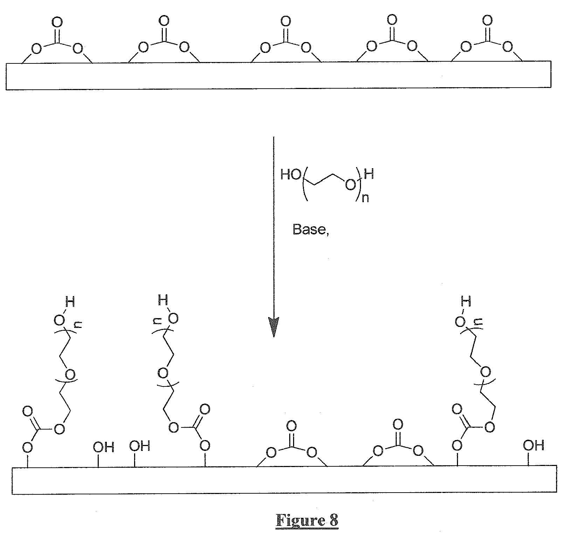

Figure 8 depicts the reaction as occurring at the surface of the polycarbonate.

The surface is modified by transcarbonatation reaction between PEG2000 and surface carbonates.

PEG2000 (1g) (Alfa Aesar) was dried under vacuum at 60°C for 4 hours. Then it was dissolved in dry HPLC grade acetonitrile (ACN, Carlo Erba) (20 mL) in a 50 mL round bottom flask equipped with a stirring bar. 100 mg of 1,5,7-Triazabicyclo[4.4.0]dec-5-ene (TBD) was added. Then, the carbothane PC3595A^{®} surface of dimensions in the order of 1x1x0.1 cm was dipped into the solution and the whole was heated at 60°C for 2h under agitation. The polyurethane films were taken out of the solution and dipped into an acetonitrile bath for 10 min, followed by an isopropanol bath for 10 min and finally a distilled water bath for 16 hours. Then the modified polyurethane films were dried in an oven at 60°C for 16 hours.

### 3.2. Characterization of the modified surface by IR

The modified polymer prepared at point 3.1 and the unmodified polymer were analyzed using an ATR-FTIR Nicolet Magna IR550 spectrometer.

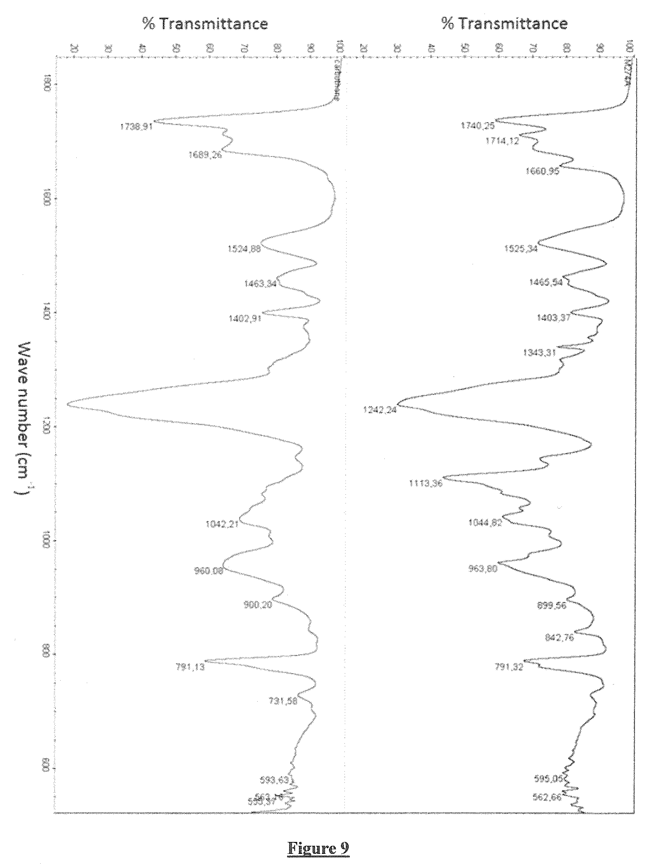

Figure 9 depicts the ATR-FTIR spectra of modified carbothane^{®} (top) and unmodified carbothane^{®} (down) of example 3.1.

The spectra shows that for the modified polymer, a new peak appears at 1113 cm⁻¹, characteristic of the C-O stretching of PEG, indicating that the reaction occurred at the surface.

## Claims

1. A method for treating the surface of a polymer substrate to confer to said substrate surface a physical and/or biochemical surface-modified property, said polymer and/or copolymer containing in at least one of its repetitive units at least a function of formula (I): 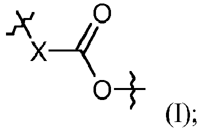
with X representing either -O- or a -NH- group, and
wherein it comprises at least a step consisting of exposing, within a solvent, said substrate surface with at least one compound containing at least a hydroxyl group and a part thereof being able to confer said modified property to said substrate surface,
said step being carried out in efficient conditions to promote the covalent binding of said compound to said surface.

2. The method according to claim 1, wherein the polymer is a polyurethane, a polycarbonate or a polymer of polyurethane and polycarbonate.

3. The method according to claim 2, wherein said polyurethane is chosen among aromatic or aliphatic polyether urethanes, aromatic or aliphatic polyester urethanes, aromatic or aliphatic polycarbonate urethanes, silicone polyethers urethanes or silicone polycarbonate urethanes and aromatic rigid polyurethanes; preferably said polyurethane being chosen among aromatic or aliphatic polyether urethanes and aromatic or aliphatic polycarbonate urethanes, wherein the polycarbonate encompasses polycarbonate-acrylonitrile butadiene styrenes (ABS) or polycarbonate-polyester blends, polycarbonate urethanes and silicone polycarbonate urethanes and wherein the polymer of polyurethane and polycarbonate encompasses polycarbonate urethanes and silicone polycarbonate polyurethanes.

4. The method according to any one of the preceding claims, wherein the solvent is selected from aprotic solvents.

5. The method according to any one of the preceding claims, wherein the step of exposing the substrate with said compound containing at least a hydroxyl group is carried out in presence of a base.

6. The method according to the preceding claim, wherein the base is chosen from potassium hydroxide, potassium tert-butoxide, sodium hydride, lithium hydroxide, barium hydroxide, triethylamine and 1,5,7-triazabicyclo[4.4.0]dec-5-ene, in particular from sodium hydride and 1,5,7-triazabicyclo[4.4.0]dec-5-ene.

7. The method according to any one of the preceding claims, wherein the step of exposing the substrate with said compound containing at least a hydroxyl group is carried out at a temperature ranging from 0°C to 100°C, in particular at a temperature ranging from 20°C to 80°C, and even more particularly at a temperature ranging from 20°C to 60°C.

8. The method according to any one of the preceding claims, wherein the step of exposing the substrate with said compound containing at least a hydroxyl group is carried out for a period of from 1 s to 24 h, in particular from 1 min to 8 h, and even more particularly from 5 min to 4 h.

9. The method according to any one of the preceding claims, wherein the step of exposing the surface substrate with said compound containing at least a hydroxyl group is carried out by dipping said substrate into a solution containing at least the solvent and said compound containing at least a hydroxyl group.

10. The method according to any one of the preceding claims, wherein said compound containing at least a hydroxyl group comprises a polymeric chain, said hydroxyl group being either a terminal group or a group present in one or more of the repetitive units of said polymeric chain and preferably being a terminal group of said polymeric chain.

11. The method according to claim 10, wherein said polymeric chain is chosen from polysaccharides, polysaccharide derivatives such as methylcellulose or dextran, polyvinylpyrrolidones, polyacrylates, polymethacrylates, polyalcohols in particular polyvinylalcohols and their derivatives such as poly(methyl vinyl ether), or polymethacrylamides.

12. The method according to any one of the preceding claims, wherein said compound containing at least a hydroxyl group is chosen from polyethylene glycol and poloxamer.

13. The method according to any one of the preceding claims, wherein the modified property is selected from the group consisting in: hydrophilic character; improved hydrophobic character, cytotoxic properties such as antibiotic, bactericidal, virucidal and/or fungicidal properties; cell-adhesion property; improved biocompatibility such as protein/bacteria/cell repellency or anti-adhesive property; improved blood compatibility such as anticoagulant properties; and reactivity property which renders said surface able to immobilize biomolecules.

14. A surface modified substrate essentially made of a polymer containing in at least one of its repetitive units at least a function of formula (I) as defined in claim 1, whose surface has been treated to confer to said substrate surface a physical and/or biochemical surface-modified property wherein it is obtainable by a method according to anyone of the preceding claims.

15. Use of a modified substrate as defined in the preceding claim for the production of medical devices or antifouling materials; or in the field of microfluidics, automotive, appliances and consumer goods, electronics or textile and artificial leather, preferably for the production of medical devices.
